# DEMANDE DE BREVET EUROPEEN

(11) **EP 0 649 764 A1**
(43) Date de publication de la demande: **26.04.1995**
(21) Numéro de dépôt: 94402378.7
(22) Date de dépôt: 21.10.1994
(51) Int. Cl.: B60G 3/12, B60G 11/18, B60G 21/055

(54) **Suspension de train arrière pour véhicule automobile**

(30) Priorité: 22.10.1993 FR 9312609
(71) Demandeur: REGIE NATIONALE DES USINES RENAULT S.A., F-92109 Boulogne Billancourt (FR)
(72) Inventeur: Veneau, Jean, F-92500 Rueil Malmaison (FR)

(57) **Abrégé**

Suspension de train arrière pour véhicule automobile à roues indépendantes dans laquelle chaque roue est montée à rotation sur une fusée (4) portée par l'extrémité libre d'un bras de suspension (2) relié à un élément de structure (1) du véhicule par un moyen de torsion (6) et au moins un élément élastique (11), caractérisée par le fait qu'un mécanisme (7) contenu dans le bras de suspension (2) relie le moyen de torsion (6) à la fusée (4) de roue et transmet les efforts verticaux et longitudinaux exercés sur la fusée (4) respectivement au moyen de torsion (6) et à élastique (11).

## Description

La présente invention concerne une suspension de train arrière pour véhicule automobile.

On connaît une suspension de train arrière pour véhicule automobile à roues indépendantes dont chaque roue est montée à rotation sur une fusée portée par l'extrémité libre d'un bras de suspension relié à un élément de structure du véhicule par un moyen de torsion et au moins un élément élastique.

Dans un telle suspension, tous les éléments élastiques situés entre l'élément de structure du véhicule et le bras de suspension sont chargés proportionnellement au poids du véhicule. Ces éléments élastiques doivent, en outre, amortir les vibrations générées lors du roulage du véhicule. Un amortissement convenable des vibrations, et en particulier des vibrations comprises dans une gamme de fréquences élevées, générées notamment par les efforts longitudinaux exercés sur la fusée de roue lors du roulage du véhicule, nécessite des éléments élastiques de raideur relativement faible. A l'opposé, supporter la charge du véhicule nécessite des éléments d'une grande raideur afin de limiter leur écrasement.

L'invention a pour objet de remédier à cet inconvénient en proposant une suspension dans laquelle la reprise des efforts verticaux dynamiques et statiques d'une part, et la filtration et l'amortissement des vibrations générées par des efforts longitudinaux d'autre part, sont réalisés par des organes distincts, lesquels peuvent être optimisés en conséquence.

A cet effet, un mécanisme contenu dans le bras de suspension relie le moyen de torsion à la fusée de roue et transmet les efforts verticaux et longitudinaux exercés sur la fusée respectivement au moyen de torsion et à l'élément élastique.

Suivant une réalisation particulière, le mécanisme est constitué par un levier et par une biellette réunis l'un à l'autre par une articulation.

Suivant une autre caractéristique particulière, la fusée de roue solidarise la biellette au bras de suspension.

Avantageusement, le moyen de torsion est constitué par une barre de torsion solidarisée par ses extrémités à l'élément de structure du véhicule et à un tube de torsion extérieur, à l'intérieur duquel elle est disposée concentriquement.

Selon une autre caractéristique de la présente invention, le levier est rigidement lié au tube de torsion.

Selon une autre caractéristique de l'invention, l'élément élastique est disposé coaxialement à l'extérieur d'une douille et est maintenu par la tête du bras de suspension.

Avantageusement, la douille est disposée concentriquement entre la barre de torsion d'une part et le tube de torsion d'autre part.

Selon l'invention, la douille constitue la portée d'un palier solidaire du tube de torsion.

Selon une autre caractéristique de la présente invention, les bras de suspension sont reliés entre eux par un profil déformable, en forme de gouttière en V ou tout profil ouvert, placé transversalement entre lesdits bras.

On comprendra mieux les buts, aspects et caractéristiques de la présente invention d'après la description donnée ci-après d'un mode de réalisation de l'invention, présenté à titre d'exemple non limitatif, en se référant aux dessins annexés, dans lesquels :
- La figure 1 est une vue en perspective éclatée d'une suspension selon l'invention d'un demi-train arrière.
- La figure 2 illustre, par une vue partielle en coupe, la liaison de la suspension avec un élément de châssis du véhicule.
- La figure 3 illustre le fonctionnement de la suspension sollicitée par un effort vertical appliqué à la fusée de roue.
- Les figures 4a et 4b illustrent le fonctionnement de la suspension sollicitée par un effort longitudinal appliqué à la fusée de roue.

Dans ce qui va suivre, on décrira un demi-train de suspension du véhicule, étant entendu que les caractéristiques de celui-ci sont identiques à celles de l'autre demi-train.

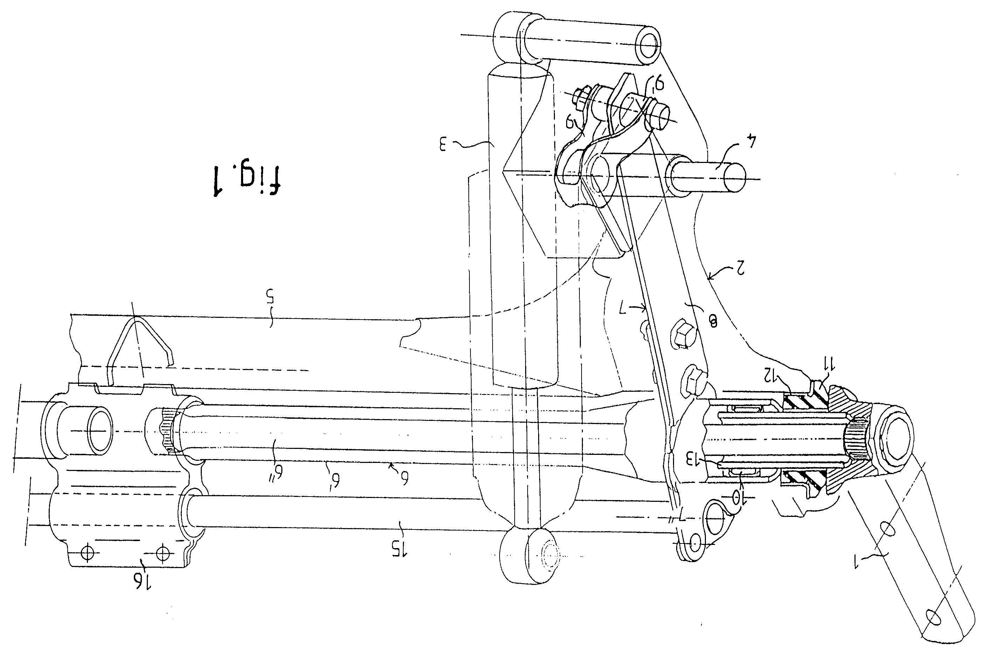

En référence à la figure 1, l'extrémité libre d'un bras tiré (2) porte une fusée (4) sur laquelle est montée à rotation une roue (non représentée). L'autre extrémité de la fusée (4) est solidaire de l'extrémité d'une biellette (9).

Un amortisseur (3) est disposé entre le bras tiré (2) et un élément de carrosserie (non représenté) du véhicule.

Les bras tirés (2) sont reliés entre eux par un profil déformable (5), en forme de gouttière en V ou tout autre profil ouvert, placé transversalement entre les bras (2).

Un moyen de torsion (6) constitué par un tube de torsion (6') et une barre de torsion (6'') est disposé parallèlement au profil déformable (5) entre un élément de structure (1) et une jumelle (16). La barre de torsion (6'') est disposée concentriquement à l'intérieur du tube de torsion (6'). Les extrémités, cannelées, de la barre de torsion sont reliées respectivement à l'extrémité du tube de torsion (6'), située au niveau de la jumelle (16), et à l'élément de structure (1) constitué par un élément du châssis du véhicule.

Le bras tiré (2) est creux et contient un mécanisme (7) constitué par une biellette (9) et un levier (8) mutuellement solidarisés par une articulation (9') autorisant un déplacement angulaire de la biellette (9) par rapport au levier (8). Au niveau de l'une de ses extrémités, le levier (8) est rigidement relié au tube de torsion (6'). La biellette (9) peut être réalisée en tôle pliée et comporte deux branches.

La fusée (4) solidarise le bras de suspension (2) et la biellette (9). A cet effet, la fusée (4) est engagée et maintenue, de manière connue, dans des trous percés respectivement dans le bras (2) et dans chaque branche de la biellette (9).

Le levier (8) est relié à son homologue par une barre de stabilisation anti-dévers (15) qui s'étend parallèlement au tube de torsion (6'). Le milieu de la barre anti-dévers (15) est relié aux moyens de torsion (6) de chaque demi-train par la jumelle (16).

Une douille (13) est disposé concentriquement entre la barre de torsion (6'') d'une part et le tube de torsion (6') d'autre part. La douille (13) est rigidement reliée, par l'une des ses extrémités, à l'élément de structure (1) et constitue la portée d'un palier (10) solidaire du tube de torsion (6'). Ce palier (10) peut être constitué par un roulement à aiguilles. Un joint d'étanchéité (14) est disposé au niveau de l'extrémité du tube de torsion (6'') la plus proche du palier (10).

Un élément élastique (11), qui peut être constitué par un manchon en élastomère dont la surface extérieure est adhérisée sur une bague (12), est disposé coaxialement à l'extérieur de la douille (13) et est maintenu par le bras de suspension (2). A cet effet, la bague (12) peut être montée à force dans un alésage réalisé au niveau de la tête du bras de suspension (2).

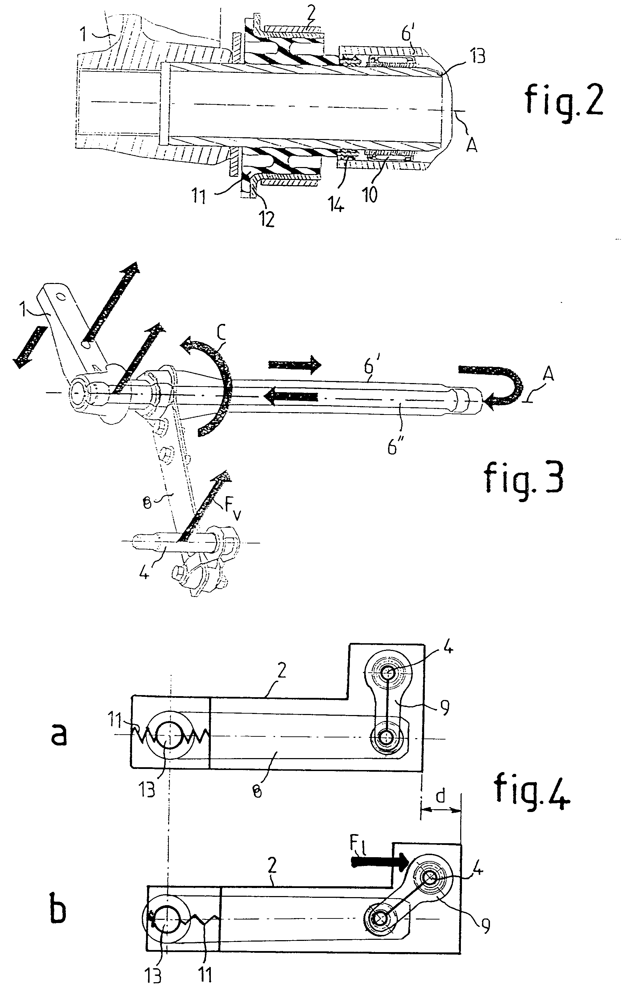

Conformément à la description précédente et aux figures 3, 4a et 4b, le fonctionnement de la suspension selon l'invention est le suivant :

En référence à la figure 3, un effort vertical Fᵥ exercé sur la fusée (4) de roue, génère un couple de torsion axial C d'axe A sur le tube de torsion (6'). La barre de torsion (6'') reprend le couple de torsion C par son extrémité solidaire du tube de torsion (6') et le transmet à l'élément de châssis (1).

En référence aux figures 4a et 4b, un effort longitudinal F₁ appliqué à la fusée (4) de roue, provoque la rotation de la biellette (9) par rapport au levier (8). Le levier (8) étant lié au tube de torsion (6'), il en résulte un transfert de l'effort longitudinal F₁ au niveau de l'élément élastique (11) qui se déforme radialement suivant la direction de l'effort.

L'élément élastique (11) ne reprend donc pas les efforts verticaux appliqués à la fusée (4) de roue, ces derniers étant transmis à l'élément de châssis par le tube de torsion (6') et la barre de torsion (6''). L'élément élastique (11) ne subit donc pas de précharge verticale et peut donc ne posséder qu'une faible raideur radiale, ce qui pour permet un amortissement optimal des vibrations haute fréquence générées par les efforts longitudinaux appliqués à la fusée (4) de roue, lors du roulage du véhicule.

Bien entendu, l'invention n'est nullement limitée au mode de réalisation décrit et illustré qui n'a été donné qu'à titre d'exemple.

Au contraire, l'invention comprend tous les équivalents techniques des moyens décrits ainsi que leurs combinaisons si celles-ci sont effectuées suivant son esprit.

## Revendications

**1)** Suspension de train arrière pour véhicule automobile à roues indépendantes dans laquelle chaque roue est montée à rotation sur une fusée (4) portée par l'extrémité libre d'un bras de suspension (2) relié à un élément de structure (1) du véhicule par un moyen de torsion (6) et au moins un élément élastique (11), caractérisée par le fait qu'un mécanisme (7) contenu dans le bras de suspension (2) relie le moyen de torsion (6) à la fusée (4) de roue et transmet les efforts verticaux et longitudinaux exercés sur la fusée (4) respectivement au moyen de torsion (6) et à l'élément élastique (11).

**2)** Suspension selon la revendication 1, caractérisée en ce que le mécanisme (7) est constitué par un levier (8) et par une biellette (9) réunis l'un à l'autre par une articulation (9').

**3)** Suspension selon les revendications 1 et 2 caractérisée en ce que la fusée (4) de roue solidarise la biellette (9) au bras de suspension (2).

**4)** Suspension selon la revendication 1 caractérisée en ce que le moyen de torsion (6) est constitué par une barre de torsion (6'') solidarisée par ses extrémités respectivement à l'élément de structure (1) et à un tube de torsion (6') extérieur, à l'intérieur duquel elle est disposée concentriquement.

**5)** Suspension selon la revendication 4 caractérisée en ce que le levier (7') est rigidement relié au tube de torsion (6').

**6)** Suspension selon la revendication 5, caractérisée en ce que l'élément élastique (11) est disposé coaxialement à l'extérieur d'une douille (13) et est maintenu par la tête du bras de suspension (2).

**7)** Suspension selon les revendications 5 et 6, caractérisée en ce que la douille est disposée concentriquement entre la barre de torsion (6'') d'une part et le tube de torsion (6') d'autre part.

**8)** Suspension selon la revendication 7, caractérisée en ce que la douille (13) constitue la portée d'un palier (10) solidaire du tube de torsion (6').

**9)** Suspension selon l'une quelconque des revendications précédentes, caractérisée en ce que les bras de suspension (2) sont reliés entre eux par un profil déformable (5), en forme de gouttière en V ou tout profil ouvert, placé transversalement entre lesdits bras (2).
